# FASCICULE DE BREVET EUROPEEN

(11) **EP 0 520 901 B1**
(45) Date de publication et mention de la délivrance du brevet: **20.11.1996**
(21) Numéro de dépôt: 92401804.7
(22) Date de dépôt: 25.06.1992
(51) Int. Cl.: C08G 73/14, H01B 3/30, C09D 179/08

(54) **Procédés de fabrication de résines polyamide-imides et utilisations de celles-ci**
Verfahren zur Herstellung von Polyamidimidharzen und ihre Verwendung
Process for the preparation of polyamide-imide resins and their uses

(30) Priorité: 28.06.1991 FR 9108076
(43) Date de publication de la demande: 30.12.1992
(73) Titulaire: GEC ALSTHOM SA, 75116 Paris (FR)
(72) Inventeur: Anton, Alain, F-69970 Chaponnay (FR); Foureys, Jean-Luc, F-69003 Lyon (FR); Wagner, Richard, F-38510 Courtenay (FR)
(74) Mandataire: Vigand, Privat

(56) Documents cités:
- US-A- 4 738 990

## Description

La présente invention concerne un procédé de fabrication de résines polyamide-imides par condensation d'un diisocyanate aromatique avec un polyacide carboxylique aromatique à au moins trois fonctions carboxyles, ou un anhydride correspondant en phase fondue. Elle s'étend en outre à des utilisations de celles-ci, notamment à un procédé de fabrication d'un vernis d'émaillage à base d'une telle résine.

Les résines polyamide-imides, en raison de leurs bonnes caractéristiques électriques thermiques et mécaniques et de leur bonne résistance aux agents chimiques, sont utilisés dans différents domaines, notamment comme isolant électrique pour conducteurs, ou comme poudre à mouler, pour la réalisation de stratifiés, de préimprégnés verre-carbone-résine ou de revêtements de surface par poudrage électrostatique ou par bain fluidisé.

Leur synthèse à partir de diisocyanates aromatiques, tels que le 4-4′ diisocyanate de diphénylméthane, et d'un acide ou anhydride aromatique à au moins trois fonctions carboxyles, tel que les anhydrides trimellitique ou pyromellitique, s'effectue de façon connue dans des solvants polaires aprotiques, tels que la N-méthyl-pyrrolidone, le diméthylacétamide, le diméthylsulfoxyde, la diméthyl-formamide, le butyrolactone et l'hexaméthylphosphorotriamide, etc... Ces solvants polaires ont un rôle catalytique dans la réaction des diisocyanates sur les acides ou anhydrides carboxyliques.

Parmi ces solvants polaires aprotiques, la N-méthyl-pyrrolidone a donné les meilleurs résultats en ce qui concerne les propriétés des polyamide-imides, car elle permet l'obtention d'une résine ayant un degré de condensation suffisant. Il se produit lors de la condensation simultanément un allongement linéaire des chaînes et la formation d'un réseau tridimensionnel. On constate même en phase finale de fabrication une évolution rapide de la viscosité de la solution réactionnelle difficilement maîtrisable pouvant conduire à une gélification. Une telle fabrication est décrite notamment dans les document FR-A-1422711 et 1501198.

Il est également connu que l'utilisation d'agents de blocage des diisocyanates, du type acide formique ou alcools, tel que décrite dans les documents FR-A-2284628 et FR-A-2516523, réduit sans les supprimer les inconvénients de la synthèse en milieu solvant polaire aprotique, notamment le danger de gélification en fin de réaction.

La présente invention a pour but de procurer un procédé de fabrication de résines polyamide-imides permettant d'éviter complètement les inconvénients de la synthèse en milieu solvant polaire aprotique, et en particulier le danger de gélification.

Le procédé de l'invention est caractérisé en ce que l'on effectue la condensation en phase fondue du diisocyanate aromatique avec l'acide carboxylique à au moins trois fonctions carboxyles, ou avec l'anhydride correspondant, en l'absence de catalyseur.

On supprime ainsi l'effet catalytique du solvant polaire aprotique sur la réaction et ses conséquences indésirables.

Le procédé de l'invention répond en outre de préférence à au moins l'une des caractéristiques suivantes :
- On effectue en réacteur une introduction ménagée de l'un des réactifs au contact de l'autre, de façon à réduire la formation de mousses.
- On ajoute en réacteur préalablement à la condensation à l'acide polycarboxylique aromatique ou à l'anhydride correspondant un co-solvant, puis introduit en continu à leur contact de façon ménagée le diisocyanate aromatique.
- On effectue la condensation en extrudeuse à partir des monomères et du co-solvant.
- On effectue la condensation en extrudeuse à partir des monomères.
- On effectue un prémélange des monomères avant de le soumettre à la condensation en extrudeuse.
- On effectue un prélémange des monomères et du co-solvant avant de soumettre ce mélange à la condensation en extrudeuse.
- On forme en premier lieu à partir des monomères un prépolymère, puis soumet ce prépolymère à une condensation en extrudeuse.
- On soumet le produit de la condensation en phase fondue à une post-condensation par chauffage dans un réacteur ou une extrudeuse.
- On additionne dans le réacteur ou l'extrudeuse au produit de la condensation en phase fondue, des composés à fonctionnalité bloquée, de préférence des di-ou-triisocyanates bloqués.

Le procédé de fabrication d'un vernie d'émaillage à base de résine polyamide-imide selon l'invention est caractérisé en ce que l'on fabrique une résine polyamide-imide par le procédé défini ci-dessus, puis dissout la résine dans un solvant polaire aprotique de teneur pondérale en N-méthyl-pyrrolidone au plus égale à 25%, éventuellement additionné d'un diluant aromatique.

Les proportions réactionnelles sont de préférence les mêmes que celles des procédés connus en présence d'un solvant polaire aprotique, à savoir un rapport des fonctions isocyanates aux autres fonctions réactives compris entre 0,98 et 1,05, et de préférence entre 1 et 1,02.

La synthèse peut s'effectuer soit en discontinu, soit en continu dans une extrudeuse.

Il est décrit ci-après à titre d'exemples et en référence aux figures du dessin annexé, des opérations de synthèse de résines polyamide-imides, soit en discontinu, avec emploi ou non d'un co-solvant de l'acide ou de l'anhydride polycarboxylique aromatique, soit en continu en extrudeuse, ainsi que les propriétés rhéologiques des résines obtenues.

On désignera ci-après pour plus de simplicité la 4,4′-diisocyanate de diphénylméthane et l'anhydride trimellitique respectivement par les abréviations MDI et TMA.

### EXEMPLE 1 - Fabrication en discontinu en réacteur sans emploi de co-solvant.

On chauffe du MDI à sa température de fusion (40° à 50°), puis ajoute en continu le TMA en élevant progressivement la température. On maintient un débit de TMA faible jusqu'à 120°C, puis l'augmente à partir de 120°C. On obtient ainsi une formation continue d'anhydride carbonique ainsi que son dégazage, sans risque de mousses abondantes pouvant provoquer des débordements. La température peut être maintenue à 120°C, ou relevée jusqu'à 140°C ou même plus.

On arrête la réaction par refroidissement lorsque le degré de condensation désiré est atteint. La résine polyamide-imide est ensuite coulée et peut être conditionnée sous forme de blocs ou d'écailles concassées, puis stockée.

### EXEMPLE 2 - Fabrication en discontinu, en réacteur, avec emploi d'un co-solvant.

Ce co-solvant doit disperser et solubiliser en partie le TMA ; il permet un dégazage plus facile de l'anhydride carbonique formé grâce à une viscosité plus faible du mélange réactionnel. Il ne doit pas être un catalyseur de la réaction de condensation, ni réagir sur le TMA ou le MDI. Il doit avoir une température d'ébullition au moins égale à la température finale de la réaction.

On peut utiliser à titre d'exemples non limitatifs les co-solvante suivants :
- L'acétate de n-butyle (température d'ébullition 126,5°C, solubilité 100 parties pour 21,6 parties de TMA).
- L'acétate d'éthoxy-éthyle (solubilité 100 parties pour 33,5 parties de TMA).
- La cyclohexanone (température d'ébullition 155,6°C, solubilité 100 parties pour 62,4 parties de TMA).

La quantité de co-solvant doit être calculée de façon à obtenir une résine polyamide-imide à teneur de 80 à 90M en poids dans le co-solvant.

On mélange le co-solvant et le TMA et chauffe progressivement le mélange à 120°C. On ajoute en continu à cette température le MDI fondu (déjà liquide à 40° à 45°C). Le débit est réglé en fonction du dégagement d'anhydride carbonique afin d'éviter une formation trop importante de mousse. La température peut être maintenue à 120°C ou relevée à 140°C ou même plus, en fonction du degré de condensation désiré. La réaction est arrêtée par refroidissement. La résine polyamide-imide est ensuite coulée et peut être conditionnée sous forme de blocs, ou concassée en écailles, puis stockée.

### EXEMPLE 3 - Fabrication en continu en extrudeuse.

Ce mode de fabrication est représenté dans les figures schématiques 1 et 2 du dessin annexé.

Les appareils d'extrusion réactive convenant le mieux pour la synthèse désirée sont du type à double vis, leur géométrie étant adaptée aux effets souhaités.

Ces doubles vis peuvent être co-rotatives et non engrenantes, contre-rotatives et non engrenantes, ou contre-rotatives et engrenantes. On peut également associer des zones de géométries différentes sur les vis.

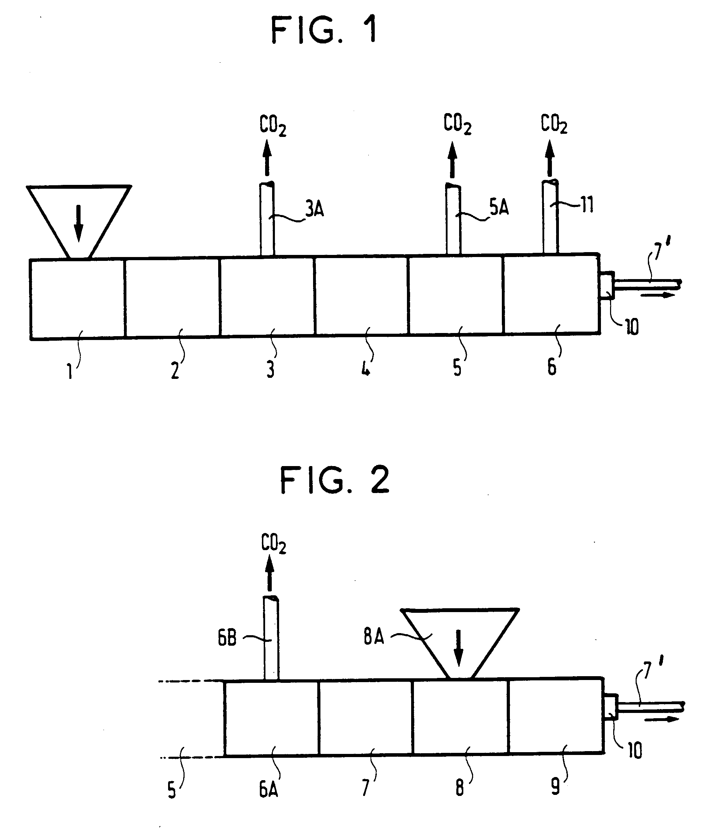

La figure 1 représente schématiquement une extrudeuse pour mode opératoire sans adjonction de composés à fonctionnalités bloquées.

La zone 1 est une zone d'introduction des monomères, et de poursuite de leur mélangeage, portée à une température de 50°C environ. La zone 2 est une zone de fusion totale et de réaction, à 100° - 170°C. La réaction continue dans la zone 3, où un évent de dégazage 3A assure l'élimination de l'anhydride carbonique formé, ce qui favorise la condensation. La réaction se poursuit dans les trois zones suivantes, la zone 4 à 180° - 200°C, la zone 5 à 200° - 220°C, munie d'un second évent 5A pour la poursuite de l'élimination de l'anhydride carbonique, et la zone 6, au-dessus de 220°C, où s'achève la condensation, avec élimination d'une quantité résiduaire d'anhydride carbonique par un évent 11. Cette zone se termine par un convergent 10, d'où sort un jonc 7' de résine polyamide-imide.

Il a été effectué selon l'invention des opérations de fabrication en continu dans les conditions suivantes d'alimentation de la zone 1.
a) alimentation en monomères seuls.
b) alimentation en monomères et en co-solvant.
c) alimentation en prémélange des monomères seuls.
d) alimentation en prémélange des monomères et du co-solvant.
e) alimentation en prépolymère polyamide-imide.

On peut obtenir le degré de condensation souhaité de la résine en variant la vitesse d'alimentation des vis, leur géométrie et la température des différentes zones.

On peut également rajouter à la suite de la zone 6 des zones permettant un refroidissement de la résine et l'adjonction de solvants, de composés solides ou en solution, à fonctionnalités bloquées, tels que des di-et triisocyanates bloqués, à une température inférieure à la température de déblocage de ces composés, comme représenté en figure 2 du dessin.

Dans celle-ci, la zone 6A de fin de condensation est munie d'un évent de dégazage de l'anhydride carbonique 6B. Elle est suivie d'une zone 7 de refroidissement. La zone 8 comporte une trémie 8A d'alimentation en composés à fonctionnalités bloquées. Elle est suivie d'une zone 9 de malaxage et d'homogénéisation, qui se termine par un convergent 10 d'évacuation d'un jonc de résine 7'.

Les résines polyamide-imides obtenues par le procédé de l'invention présentent une viscosité intrinsèque dans la NMP comprise entre 0,2 et 0,6 dl/g environ.

L'invention permet d'obtenir des résines de polyamide-imide présentant un caractère, soit thermoplastique, soit thermodurcissable, selon leurs conditions d'élaboration et de mise en oeuvre. En effet, dans leur fabrication selon le procédé de l'invention, le risque de réaction entre chaînes (par réaction des fonctions isocyanates disponibles d'une chaîne avec les atomes d'hydrogène des fonctions amides formées sur une autre chaîne) est considérablement diminué. Par contre, une telle réaction avec formation d'un réseau tridimensionnel peut avoir lieu lors de la mise en oeuvre de la résine. On peut donc obtenir, en jouant sur le degré de condensation, sur l'addition ou non de composés à fonctionnalités bloquées et sur les conditions de mise en oeuvre de la résine, des produits à caractères thermoplastique ou thermodurcissable.

Des essais d'analyse rhéologique ont permis de déterminer le comportement viscoélastique d'une résine polyamide-imide obtenue selon l'exemple 2, dont la polycondensation avait été effectuée en présence d'un co-solvant de solubilisation partielle de l'anhydride trimellitique. Une première série d'essais a été effectuée sur la résine à 80% en poids de solide, en présence de 20% de co-solvant, et une seconde série sur la résine en solution à 50% dans un mélange de 75% de diméthyl-formamide et 25% de xylène et de co-solvant.

Pour les essais sur la résine solide à 80%, le produit en poudre est déposé entre deux feuilles de papier siliconé, puis pressé à 60°C pendant 1 minute. On calibre l'épaisseur avec des cales de 0,5 mm. Après refroidissement, on dépose la galette obtenue entre deux tissus de verre, de grammage 104g/m², puis on presse l'ensemble à 60°C pendant 1 minute sous 2 bars. Cette opération permet de bien imprégner les fibres du tissu et d'obtenir un produit homogène et manipulable.

Pour les essais sur la résine en solution à 50%, on imprègne le même tissu de verre que précédemment, de grammage 104g/m², par cette résine en solution, de façon à obtenir un préimprégné à environ 35% de matériau solide. On sèche à l'air libre. Le caractère collant disparait après environ 3h.

Les essais ont été effectuée d'une part en gradient thermique, par mesure du module élastique et du module visqueux en fonction de la température θ, d'autre part en isotherme, par mesure de ces mêmes modules en fonction du temps t à température constante :

### 1°) Analyses en gradient thermique :

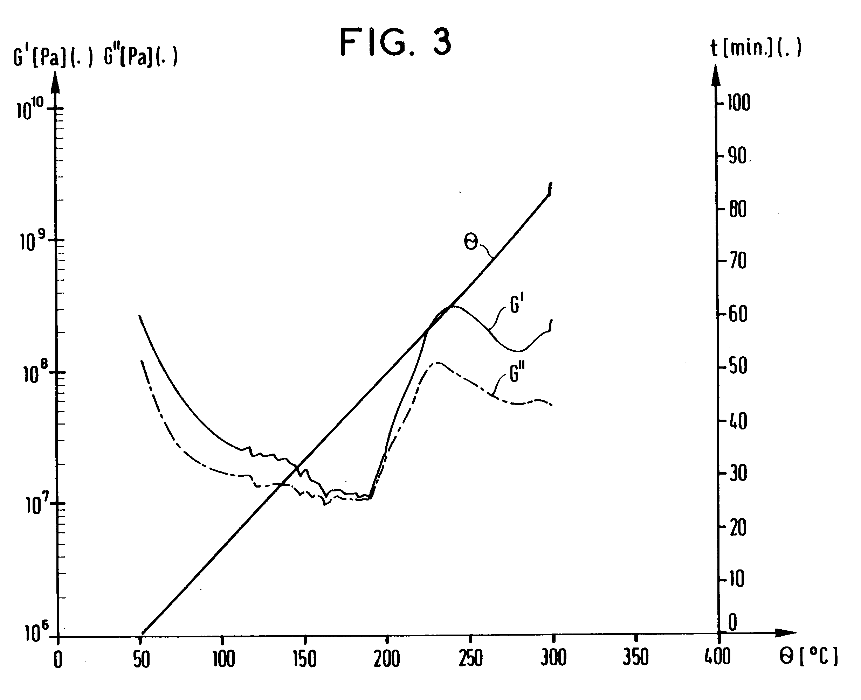

Les essais sur le polymère solide à 80% ont eu lieu sous une contrainte sinusoïdale de 0,2%, de vitesse 40 rad/sec, par chauffage de 50°C à 300°C à 3° C/minute. Les variations du module élastique G′ et du module visqueux G˝ sont représentées à une échelle logarithmique sur la figure 3 du dessin annexé, où la droite représente la variation de la température θ.

Le produit présente un creux de viscosité en palier compris entre 100° et 189°C. La réaction de condensation se poursuit ensuite très rapidement pour donner un module élastique G′ maximum à 237°C. Après 237°C, le produit formé fond, maie une autre réaction parait s'amorcer à partir de 278°C.

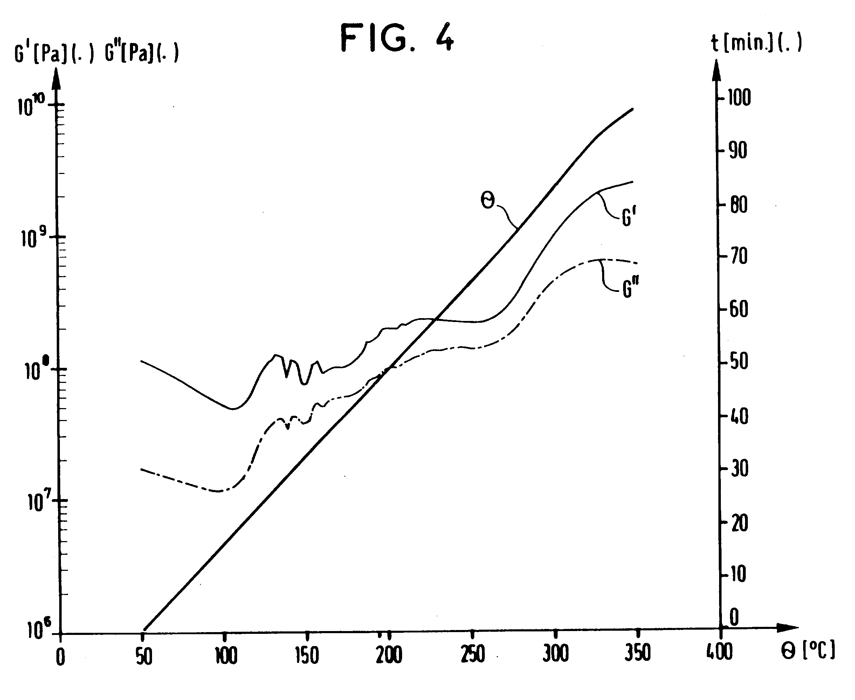

Les essais sur le polymère en solution ont eu lieu dans les mêmes conditions, sauf que son évolution a été suivie jusqu'à 350°C. Leurs résultats sont représentés par les courbes de la figure 4.

Le module visqueux G˝ de départ est plus faible. Le minimum de viscosité est atteint vers 100°C. Le départ des matières volatiles se traduit par une remontée des modules jusqu'à 215° - 220°C. La stabilisation des valeurs des modules entre 230°C et 250°C correspond probablement à la fin de la réaction observée sur l'échantillon solide, dont le début était probablement masqué par le départ des solvants. Une seconde réaction paraît se produire à partir de 260°C.

Le polymère manifeste donc deux seuils de réactivité vers 190°-200°C et 260° - 270°C.

### 2°) Analyses en isotherme :

Les essais sur le solide à 80% ont été effectués à 150°C et 170°C, dans les mêmes conditions que les essais en gradient thermique. La température 0 a été portée de l'ambiante à 150°C ou 170°C en 10 minutes, puis maintenue en palier de 180 minutes.

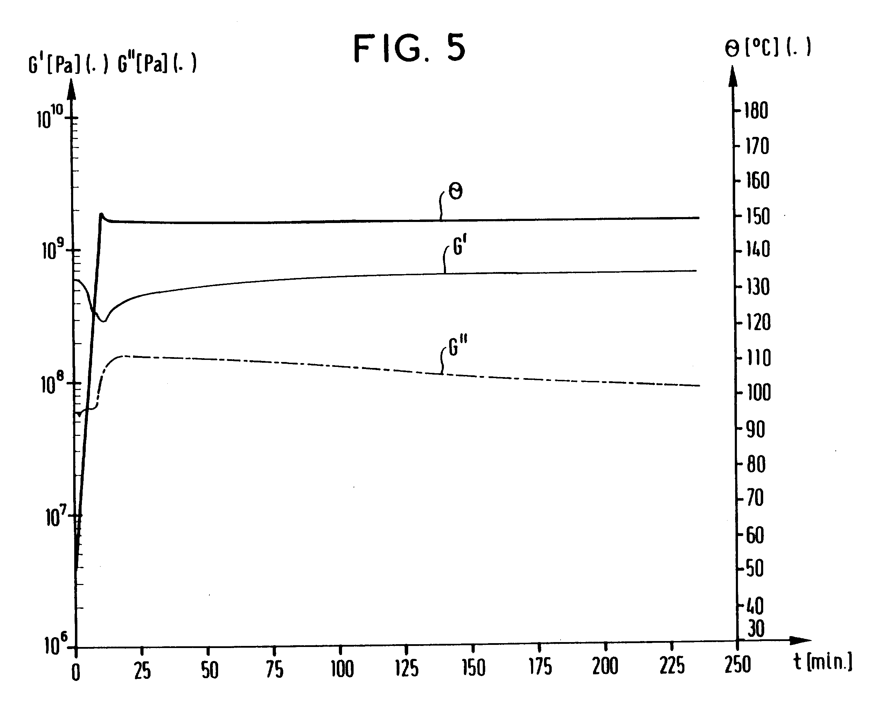

La variation des modules élastique G′ et visqueux G˝ à 150°C en fonction du temps t est représentée sur la figure 5 du dessin. On observe une augmentation très lente du module élastique G′ et une quasi-stabilité du module visqueux G˝.

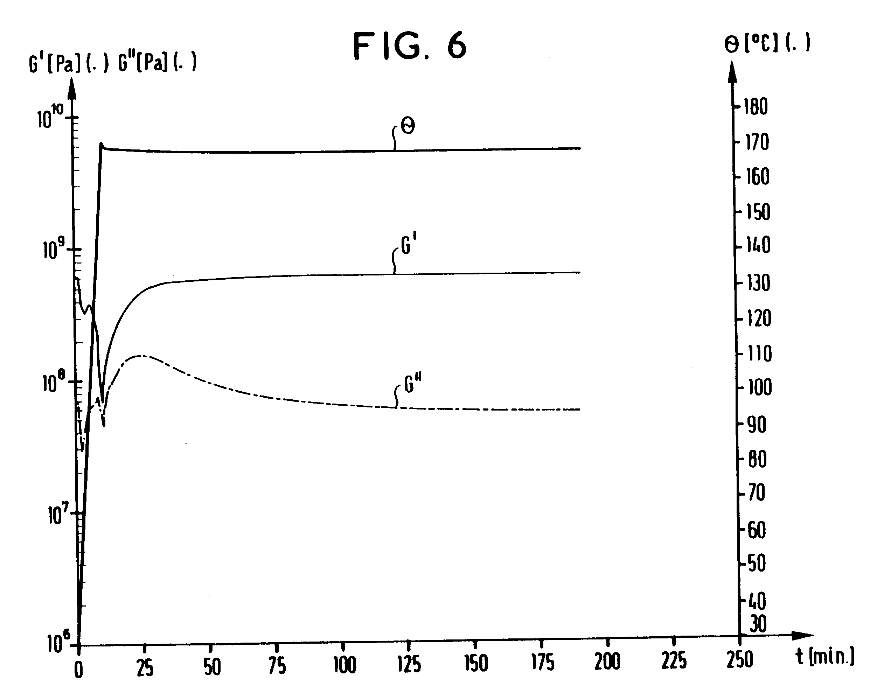

La variation des modules G′ et G˝ à 170°C avec le temps t est représentée sur la figure 6 du dessin. Le polymère évolue beaucoup plus rapidement, et la variation du module visqueux G˝ traduit la formation d'un réseau tridimensionnel déjà bien avancée à cette température.

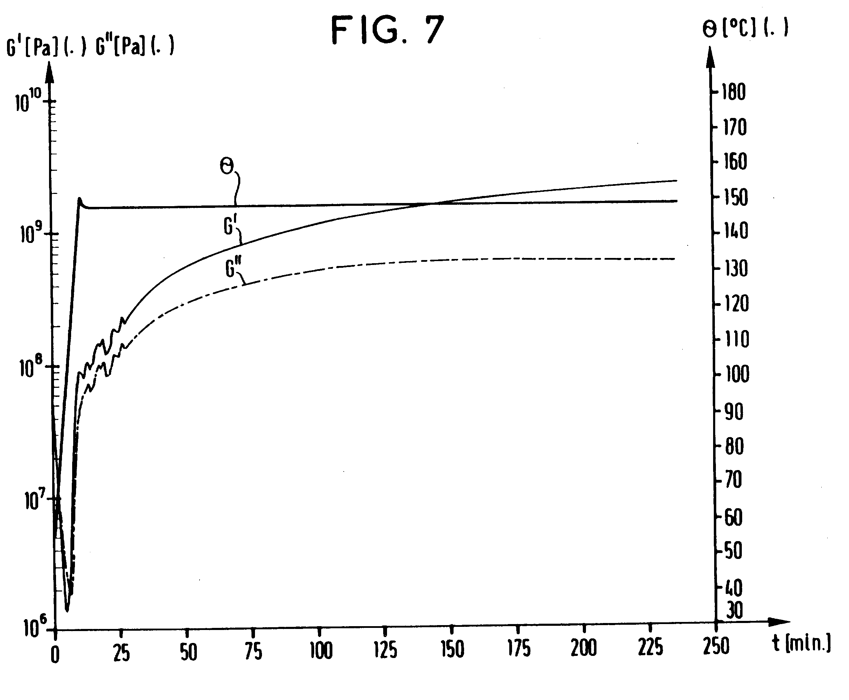

Il n'a été effectuée sur le polymère en solution à 50% qu'un seul essai en isotherme à 150°C, dans les mêmes conditions que les essais de gradient thermique. Les modules élastique G′ et visqueux G˝, représentés sur la figure 7 du dessin en fonction de temps t, évoluent parallèlement. Ceci parait indiquer qu'il se produit principalement un allongement des chaînes de polymère, l'apparition de liaisons entre chaînes n'ayant lieu que plus tard.

Il apparaît que le polymère à 150°C, à l'état solide et même en solution, conserve un caractère thermoplastique, alors qu'à 170°C le comportement du polymère solide est de dans thermodurcissable.

## Revendications

1. Procédé de fabrication d'une résine polyamide-imide par condensation d'un diisocyanate aromatique avec un acide polycarboxylique aromatique à au moins trois fonctions carboxyles, ou un anhydride correspondant, en phase fondue, caractérisé en ce que l'on effectue la condensation en l'absence de catalyseur.

2. Procédé selon la revendication 1, caractérisé en ce que l'on effectue en réacteur une introduction ménagée de l'un des réactifs au contact de l'autre, de façon à réduire la formation de mousses.

3. Procédé selon l'une des revendications 1 ou 2, caractérisé en ce que l'on ajoute en réacteur préalablement à la condensation à l'acide polycarboxylique aromatique ou à l'anhydride correspondant un co-solvant, puis introduit en continu à leur contact de façon ménagée le diisocyanate aromatique.

4. Procédé selon la revendication 3, caractérisé en ce que l'on effectue la condensation en extrudeuse à partir des monomères et du co-solvant.

5. Procédé selon l'une des revendications 1 à 3, caractérisé en ce que l'on effectue la condensation en extrudeuse à partir des monomères.

6. Procédé selon la revendication 5, caractérisé en ce que l'on effectue un prémélange des monomères avant de le soumettre à la condensation en extrudeuse.

7. Procédé selon l'une des revendications 3 à 6, caractérisé en ce que l'on effectue un prémélange des monomères et du co-solvant avant de soumettre ce mélange à la condensation en extrudeuse.

8. Procédé selon l'une des revendications 1 à 7, caractérisé en ce que l'on forme en premier lieu à partir des monomères un prépolymère, puis soumet ce prépolymère à une condensation en extrudeuse.

9. Procédé de fabrication selon l'une des revendications 1 à 8, caractérisé en ce que l'on soumet le produit de la condensation en phase fondue à une post-condensation par chauffage dans un réacteur ou une extrudeuse.

10. Procédé selon la revendication 9, caractérisé en ce que l'on additionne dans le réacteur ou l'extrudeuse au produit de la condensation en phase fondue, des composés à fonctionnalité bloquée, de préférence des di-ou triisocyanates bloqués.

11. Procédé de fabrication d'un vernis d'émaillage à base de polyamide-imide, caractérisé en ce que l'on fabrique une résine polyamide-imide par le procédé selon l'une des revendications 1 à 10, puis dissout la résine dans un solvant polaire aprotique de teneur pondérale en N-méthyl-pyrrolidone au plus égale à 25%, éventuellement additionné d'un diluant aromatique.

## Patentansprüche

1. Verfahren zur Herstellung eines Polyamid-Imidharzes durch Kondensation eines aromatischen Diisocyanats mit einer aromatischen Polycarboxylsäure, die mindestens drei Carboxylfunktionen besitzt, oder mit einem entsprechenden Anhydrid in flüssiger Phase, dadurch gekennzeichnet, daß die Kondensation in Abwesenheit eines Katalysators durchgeführt wird.

2. Verfahren nach Anspruch 1, dadurch gekennzeichnet, daß man langsam in einem Reaktionsgefäß einen der Reaktionsstoffe mit dem anderen in Kontakt bringt, so daß die Schaumbildung verringert wird.

3. Verfahren nach einem der Ansprüche 1 oder 2, dadurch gekennzeichnet, daß vor der Kondensation im Reaktionsgefäß ein zweites Lösungsmittel der aromatischen Polycarboxylsäure oder dem entsprechenden Anhydrid zugefügt wird und dann kontinuierlich langsam das aromatische Diisocyanat zugesetzt wird.

4. Verfahren nach Anspruch 3, dadurch gekennzeichnet, daß die Kondensation in einer Strangpresse ausgehend von den Monomeren und dem zweiten Lösungsmittel erfolgt.

5. Verfahren nach einem der Ansprüche 1 bis 3, dadurch gekennzeichnet, daß die Kondensation in der Strangpresse ausgehend von den Monomeren erfolgt.

6. Verfahren nach Anspruch 5, dadurch gekennzeichnet, daß die Monomere vorgemischt werden, ehe sie der Kondensation in der Strangpresse ausgesetzt werden.

7. Verfahren nach einem der Ansprüche 3 bis 6, dadurch gekennzeichnet, daß die Monomere und das zweite Lösungsmittel vorgemischt werden, ehe diese Mischung der Kondensation in der Strangpresse ausgesetzt wird.

8. Verfahren nach einem der Ansprüche 1 bis 7, dadurch gekennzeichnet, daß zuerst ausgehend von Monomeren ein Vorpolymer gebildet wird, das dann einer Kondensation in der Strangpresse unterworfen wird.

9. Verfahren zur Herstellung nach einem der Ansprüche 1 bis 8, dadurch gekennzeichnet, daß das Kondensationsprodukt in der flüssigen Phase einer Nachkondensierung durch Erwärmung in einem Reaktor oder einer Strangpresse ausgesetzt wird.

10. Verfahren nach Anspruch 9, dadurch gekennzeichnet, daß man im Reaktionsgefäß oder der Strangpresse dem Kondensationsprodukt in flüssiger Phase Stoffe mit blockierter Funktionalität zufügt, vorzugsweise blockierte Di- oder Triisocyanate.

11. Verfahren zur Herstellung eines Beschichtungslacks auf Polyamid-Imidbasis, dadurch gekennzeichnet, daß man ein Polyamid-Imidharz gemäß dem Verfahren nach einem der Ansprüche 1 bis 10 herstellt, dann das Harz in einem aprotischen polaren Lösungsmittel auflöst, dessen Gewichtsanteil an N-Methyl-Pyrrolidon höchstens 25% beträgt und dem ggf. ein aromatisches Verdünnungsmittel zugefügt wird.

## Claims

1. A method of manufacturing a polyamide-imide resin by condensation in the molten phase of an aromatic diisocyanate with an aromatic polycarboxylic acid having at least three carboxyl functions, or with a corresponding anhydride, the method being characterized in that the condensation is performed in the absence of a catalyst.

2. A method according to claim 1, characterized in that one of the reagents is introduced into a reaction vessel in controlled manner to come into contact with the other so as to reduce foam formation.

3. A method according to claim 1 or 2, characterized in that prior to condensation with the aromatic polycarboxylic acid or the corresponding anhydride, a cosolvent is added to the reaction vessel, and then the aromatic diisocyanate is added continuously in controlled manner to come into contact therewith.

4. A method according to claim 3, characterized in that the condensation is performed in an extruder from the monomers and from the cosolvent.

5. A method according to any one of claims 1 to 3, characterized in that the condensation is performed in an extruder from the monomers.

6. A method according to claim 5, characterized in that the monomers are premixed prior to being subjected to condensation in an extruder.

7. A method according to any one of claims 3 to 6, characterized in that the monomers and the cosolvents are premixed prior to being subjected to condensation in an extruder.

8. A method according to any one of claims 1 to 7, characterized in that a prepolymer is initially formed from the monomers, after which the prepolymer is subjected to condensation in an extruder.

9. A manufacturing method according to any one of claims 1 to 8, characterized in that the product of condensation in the molten phase is subjected to post-condensation by heating in a reaction vessel or in an extruder.

10. A method according to claim 9, characterized in that compounds having blocked functionality, preferably blocked di-or triisocyanates, are added to the molten phase condensation product in the reaction vessel or the extruder.

11. A method of manufacturing an enamelling varnish based on polyamide-imide, characterized in that a polyamide-imide resin is made by the method according to any one of claims 1 to 10, and then the resin is dissolved in an aprotic polar solvent having a concentration by weight of N-methyl-pyrrolidone of not more than 25%, possibly together with an aromatic diluant.
